# EUROPEAN PATENT APPLICATION

(11) **EP 4 799 911 A1**
(43) Date of publication of application: **02.09.2026**
(21) Application number: 24881118.4
(22) Date of filing: 22.07.2024
(51) Int. Cl.: B62D 21/11, B60K 5/12

(54) **POWERTRAIN SUSPENSION SYSTEM AND ALL-TERRAIN VEHICLE**

(30) Priority: 27.10.2023 CN 202322908731 U
(71) Applicant: Segway Technology Co., Ltd., Jiangsu 213000 (CN)
(72) Inventor: ZHAO, Jiajun, hangzhou, Jiangsu 213000 (CN)
(74) Representative: Manna, Sara
(86) International application number: PCT/CN2024/106801
(87) International publication number: WO 2025/086746

(57) **Abstract**

A powertrain suspension system and a vehicle. The powertrain suspension system is mounted on a vehicle frame (1) and comprises a first suspension assembly (2), a second suspension assembly (3), and a third suspension assembly (4). The vehicle frame (1) comprises a left longitudinal beam (11), a night longitudinal beam (12), and a first beam body (13). The first beam body (13) connects the left longitudinal beam (11) and the right longitudinal beam (12) and is located between the left longitudinal beam (11) and the right longitudinal beam (12). The powertrain comprises an engine (6) and a gearbox (7). A plurality of pistons of the engine (6) are arranged in the front-to-rear direction. The first suspension assembly (2) is connected to the left longitudinal beam (11), the second suspension assembly (3) is connected to the right longitudinal beam (12), the third suspension assembly (4) is connected to the first beam body (13), and the third suspension assembly (4) is adjacent to a reference plane and is located on a front side or a rear side of the engine (6). The reference plane is a plane in which axes of the plurality of pistons are located.

## Description

### CROSS-REFERENCE TO RELATED APPLICATION

The present invention is based on and claims priority to Chinese Patent Application No. 202322908731.3, filed on October 27, 2023, the entire content of which is incorporated into the present invention by reference.

### FIELD

The present invention belongs to the field of all-terrain vehicles, and in particular to a mounting system for a powertrain and an all-terrain vehicle.

### BACKGROUND

A powertrain of an all-terrain vehicle (ATV) usually adopts an in-line four-cylinder engine and is longitudinally mounted on a vehicle frame, that is, four pistons of the in-line four-cylinder engine are arranged in the front-rear direction. In the related arts, the longitudinally arranged powertrain is usually fixed to left and right longitudinal beams of the vehicle frame via a mounting system. In this case, the distance between the mounting system and a plane where axes of the plurality of pistons lie is relatively large. To effectively counteract overturning moment of the engine, higher requirements are imposed on the damping effect and structural strength of the mounting system, which further results in the defect of high cost for the mounting system.

### SUMMARY

The present invention is intended to solve at least one of the problems existing in the related art to at least some extent.

To this end, embodiments of the present invention provide a mounting system for the powertrain, which has the advantages of excellent overturning moment counteracting effect and low cost.

Embodiments of the present invention further provide an all-terrain vehicle.

A mounting system for a powertrain according to an embodiment of the present invention is configured to be mounted to a vehicle frame, and the vehicle frame includes a left longitudinal beam, a right longitudinal beam and a first beam, the first beam connects the left longitudinal beam and the right longitudinal beam and is disposed between the left longitudinal beam and the right longitudinal beam, the powertrain includes an engine and a transmission, and a plurality of pistons of the engine is arranged along a front-rear direction, the mounting system for the powertrain including: a first mounting assembly, a second mounting assembly and a third mounting assembly, and the first mounting assembly is connected to the left longitudinal beam, the second mounting assembly is connected to the right longitudinal beam, the third mounting assembly is connected to the first beam, the third mounting assembly is configured to be adjacent to a reference plane and located at a front side or a rear side of the engine, and the reference plane is a plane where axes of the plurality of pistons lie.

In the mounting system for the powertrain according to embodiments of the present disclosure, the powertrain is fixed to a vehicle frame via a first mounting assembly, a second mounting assembly, and a third mounting assembly. A plurality of pistons of an engine in the powertrain are arranged in a front-rear direction, and an axial direction of an output shaft is also the front-rear direction. By arranging the third mounting assembly adjacent to a plane where axes of the plurality of pistons are located and at a front side or a rear side of the engine, a distance between the third mounting assembly and a center of mass of the engine in the front-rear direction is increased. When the pistons in the engine move sequentially to generate an overturning moment in the front-rear direction, the third mounting assembly can better counteract the overturning moment. Furthermore, in this case, the first mounting assembly and the second mounting assembly, which are connected to a left longitudinal beam and a right longitudinal beam respectively, are only required to mainly counteract the reciprocating inertia force and rotational inertia force of the engine, without additional reinforcement of structures and damping effects for counteracting the overturning moment, thereby reducing the cost of the mounting system for the powertrain.

In some embodiments, the vehicle frame further includes a second beam spaced apart from the first beam along the front-rear direction, and the second beam connects the left longitudinal beam and the right longitudinal beam and is disposed between the left longitudinal beam and the right longitudinal beam;
the mounting system for the powertrain further includes a fourth mounting assembly configured to be connected to the second beam and adjacent to the reference plane, and the fourth mounting assembly and the third mounting assembly are respectively disposed at two opposite sides of the engine in the front-rear direction.

In some embodiments, the first mounting assembly has a first mounting portion configured to be connected to the left longitudinal beam, the second mounting assembly has a second mounting portion configured to be connected to the right longitudinal beam, the third mounting assembly has a third mounting portion configured to be connected to the first beam, and the second mounting assembly has a fourth mounting portion configured to be connected to the second beam;
a height of the third mounting portion and a height of the fourth mounting portion are higher than a height of the first mounting portion and a height of the second mounting portion.

In some embodiments, the transmission and the engine are arranged in the front-rear direction, the third mounting assembly is configured to be connected to a housing of the engine, the fourth mounting assembly is configured to be connected to a housing of the transmission, a height of at least one of the third mounting portion and the fourth mounting portion is greater than a height of a crankshaft axis of the engine, and a height difference, denoted as h1, is formed between the at least one of the third mounting portion and the fourth mounting portion and the crankshaft axis, and 115 mm ≤ h1 ≤ 135 mm.

In some embodiments, a height of at least one of the first mounting portion and the second mounting portion is lower than the height of the crankshaft axis, and a height difference, denoted as h2, is formed between the at least one of the first mounting portion and the second mounting portion and the crankshaft axis, and 49 mm ≤ h2 ≤ 69 mm.

In some embodiments, the third mounting portion includes three mounting holes distributed in a triangular shape.

In some embodiments, a height difference, denoted as h3, is formed between the first mounting portion and the second mounting portion, and 52 mm ≤ h3 ≤ 72 mm.

In some embodiments, a height difference, denoted as h4, is formed between the third mounting portion and the fourth mounting portion, and 131 mm ≤ h4 ≤ 151 mm.

In some embodiments, at least one of the first mounting assembly, the second mounting assembly, the third mounting assembly and the fourth mounting assembly include a first bracket, a second bracket and a damping member sandwiched between the first bracket and the second bracket, the first bracket and the second bracket are respectively configured to be connected to the powertrain and the vehicle frame, and the damping member is configured to be detachably connected to at least one of the first bracket and the second bracket.

An all-terrain vehicle according to an embodiment of the present invention includes the mounting system for the powertrain of any one of above- mentioned embodiments of the present invention.

The technical advantages of the all-terrain vehicle according to embodiments of the present invention are the same as those of the mounting system for the powertrain in the above- mentioned embodiments, and thus are not repeated herein.

### BRIEF DESCRIPTION OF THE DRAWINGS

FIG. 1 is an isometric view of a powertrain and a mounting assembly according to an embodiment of the present invention.
FIG. 2 is a top view of a powertrain and a mounting assembly according to an embodiment of the present invention.
FIG. 3 is a left view of a powertrain and a mounting assembly according to an embodiment of the present invention.
FIG. 4 is a front view of a powertrain and a mounting assembly according to an embodiment of the present invention.
FIG. 5 is a rear view of a powertrain and a mounting assembly according to an embodiment of the present invention.
FIG. 6 is an isometric view of a mounting system for a powertrain according to an embodiment of the present invention.
FIG. 7 is a top view of a mounting system for a powertrain according to an embodiment of the present invention.
FIG. 8 is an exploded view of a third mounting assembly in a mounting system for a powertrain according to an embodiment of the present invention.
FIG. 9 is an exploded view of a fourth mounting assembly in a mounting system for a powertrain according to an embodiment of the present invention.

Reference numerals:
1-vehicle frame; 11-left longitudinal beam; 12-right longitudinal beam; 13-first beam; 14-second beam; 2-first mounting assembly; 3-second mounting assembly; 4-third mounting assembly; 41-first bracket; 42-damping member; 43-second bracket; 431-mounting hole; 5-fourth mounting assembly; 6-engine; 7-transmission; X- reference plane.

### DETAILED DESCRIPTION

Embodiments of the present invention are described in detail below, examples of which are illustrated in the accompanying drawings. The embodiments described below with reference to the accompanying drawings are exemplary and are intended to explain the present invention, but shall not be construed as limiting the present invention.

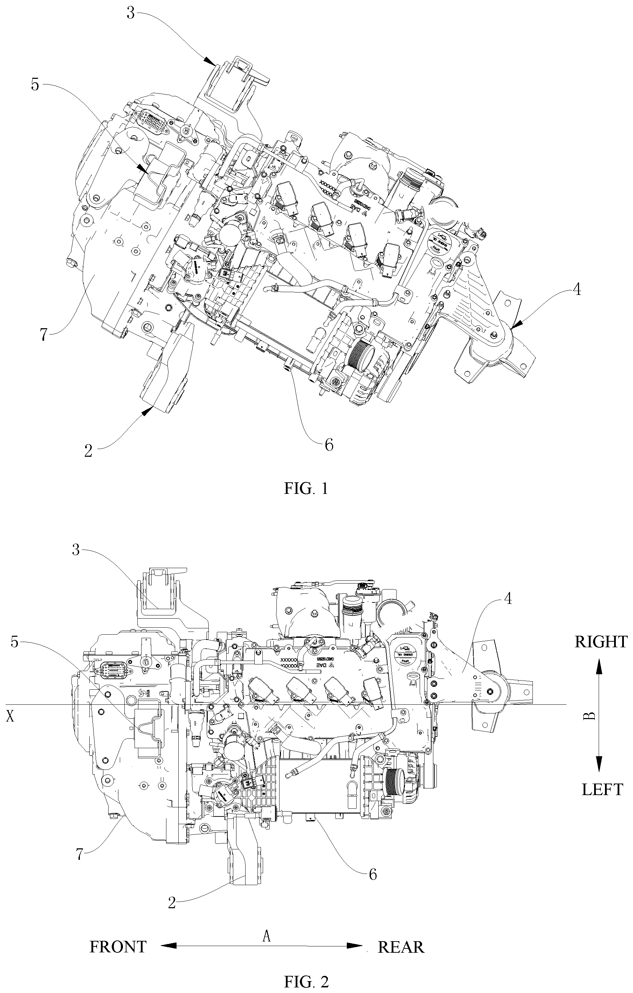

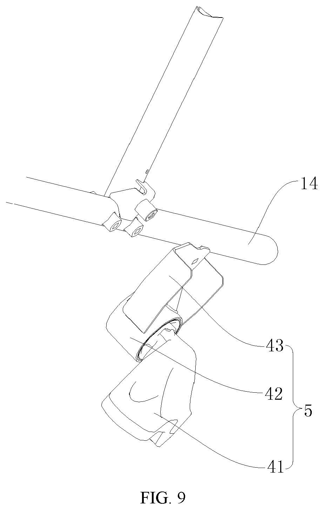

A mounting system for a powertrain according to embodiments of the present invention is described below with reference to FIGS. 1 to 9.

The mounting system for a powertrain according to embodiments of the present invention is mounted to a vehicle frame 1. The vehicle frame 1 includes a left longitudinal beam 11, a right longitudinal beam 12 and a first beam 13. The first beam 13 connects the left longitudinal beam 11 and the right longitudinal beam 12 and is disposed between the left longitudinal beam 11 and the right longitudinal beam 12. The powertrain includes an engine 6 and a transmission. A plurality of pistons of the engine 6 are arranged in a front-rear direction. The mounting system for the powertrain includes a first mounting assembly 2, a second mounting assembly 3 and a third mounting assembly 4. The first mounting assembly 2 is connected to the left longitudinal beam 11, the second mounting assembly 3 is connected to the right longitudinal beam 12, and the third mounting assembly 4 is connected to the first beam 13. The third mounting assembly 4 is adjacent to a reference plane X and located at a front side or a rear side of the engine 6. The reference plane X is a plane where axes of the plurality of pistons lie.

According to the mounting system for the powertrain of embodiments of the present invention, the powertrain is fixed to the vehicle frame 1 via the first mounting assembly 2, the second mounting assembly 3 and the third mounting assembly 4. The plurality of pistons of the engine 6 in the powertrain are arranged in the front-rear direction, and an axial direction of an output shaft is also the front-rear direction. By arranging the third mounting assembly 4 adjacent to the plane where the axes of the plurality of pistons lie and at the front side or the rear side of the engine 6, a distance between the third mounting assembly 4 and a center of mass of the engine 6 in the front-rear direction is larger. When the pistons in the engine 6 move sequentially to generate an overturning moment in the front-rear direction, the third mounting assembly 4 can better counteract the overturning moment. Moreover, in this case, the first mounting assembly 2 and the second mounting assembly 3, which are respectively connected to the left longitudinal beam 11 and the right longitudinal beam 12, only need to mainly counteract reciprocating inertia force and rotational inertia force of the engine 6, without requiring reinforcement of structure and damping effect for counteracting the overturning moment, thereby reducing the cost of the mounting system for the powertrain.

It should be noted that the engine 6 is an in-line engine, i.e., the plurality of pistons therein are linearly arranged in the front-rear direction. In addition, the number of each of the first mounting assembly 2, the second mounting assembly 3 and the third mounting assembly 4 may be one, two or more.

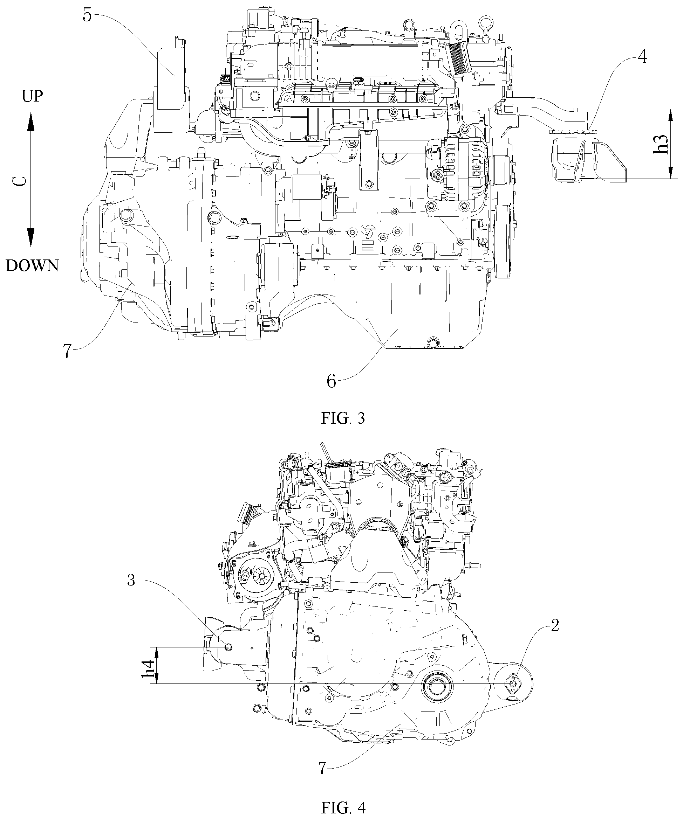

For ease of understanding, a direction indicated by an arrow denoted as A in FIG. 2 is the front-rear direction of the mounting system for the powertrain according to embodiments of the present invention, a direction indicated by an arrow denoted as B in FIG. 2 is the left-right direction of the mounting system for the powertrain according to embodiments of the present invention, and a direction indicated by an arrow denoted as C in FIG. 3 is the up-down direction of the mounting system for the powertrain according to embodiments of the present invention.

In some embodiments, as shown in FIGS. 2, 6, 7 and 9, the vehicle frame 1 further includes a second beam 14. The second beam 14 is spaced apart from the first beam 13 in the front-rear direction. The second beam 14 connects the left longitudinal beam 11 and the right longitudinal beam 12 and is disposed between the left longitudinal beam 11 and the right longitudinal beam 12. The mounting system for the powertrain further includes a fourth mounting assembly 5. The fourth mounting assembly 5 is connected to the second beam 14 and adjacent to the reference plane X. The fourth mounting assembly 5 and the third mounting assembly 4 are respectively disposed at two opposite sides of the engine 6 in the front-rear direction.

The fourth mounting assembly 5 connects the second beam 14 and the powertrain, and cooperates with the third mounting assembly 4 to counteract the overturning moment of the engine 6, so that the counteracting effect of the mounting assemblies on the overturning moment of the engine 6 is better, and requirements on the structure and damping performance of the third mounting assembly 4 and the fourth mounting assembly 5 are lower, thereby reducing the cost.

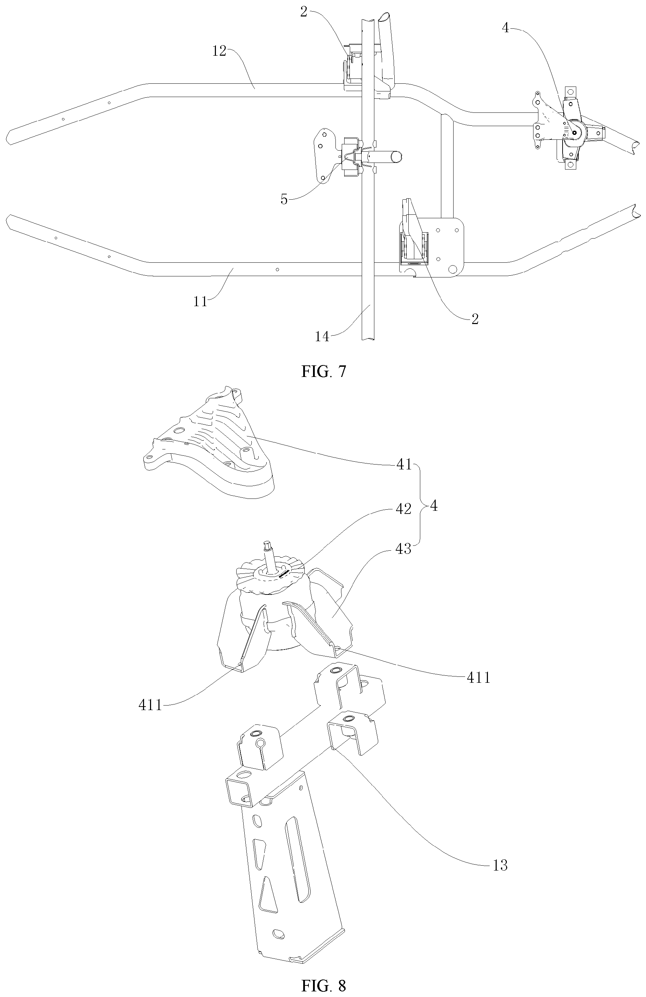

Specifically, as shown in FIGS. 2 and 7, the number of each of the first mounting assembly 2, the second mounting assembly 3, the third mounting assembly 4 and the fourth mounting assembly 5 is one, and the first mounting assembly 2, the second mounting assembly 3, the third mounting assembly 4 and the fourth mounting assembly 5 are distributed in a substantially rhombic shape in a top view. The third mounting assembly 4 and the fourth mounting assembly 5 are respectively disposed at left and right sides of the reference plane X. In this case, the third mounting assembly 4 and the fourth mounting assembly 5 can also effectively counteract the reciprocating inertia force and the rotational inertia force of the engine 6.

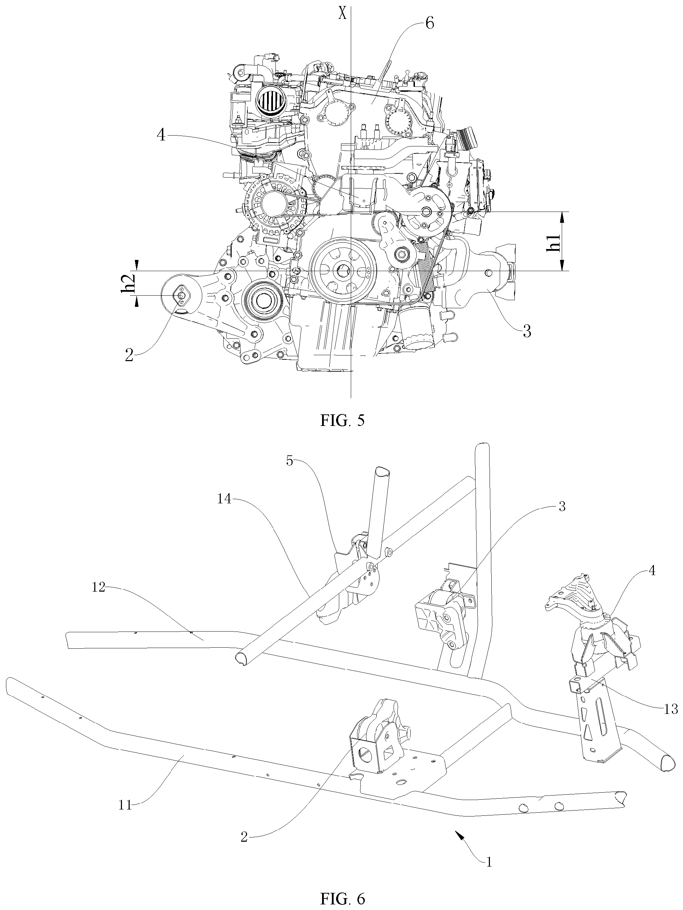

In some embodiments, as shown in FIGS. 2 and 6, the first mounting assembly 2 has a first mounting portion connected to the left longitudinal beam 11, the second mounting assembly 3 has a second mounting portion connected to the right longitudinal beam 12, the third mounting assembly 4 has a third mounting portion connected to the first beam 13, and the second mounting assembly 3 has a fourth mounting portion connected to the second beam 14. A height of each of the third mounting portion and the fourth mounting portion is higher than a height of each of the first mounting portion and the second mounting portion.

The third mounting portion and the fourth mounting portion are higher than the left longitudinal beam 11 and the right longitudinal beam 12 of the vehicle frame 1, and the arrangement that the third mounting portion and the fourth mounting portion are higher than the first mounting portion and the second mounting portion not only ensures that the engine 6 is connected to the vehicle frame 1 via the third mounting assembly 4 and the fourth mounting assembly 5, but also avoids interference of the third mounting assembly 4 and the fourth mounting assembly 5 with an output end of the powertrain, making the mounting of the powertrain on the vehicle frame 1 more convenient and flexible.

Specifically, the third mounting assembly 4 is located at the rear side of the engine 6, and the fourth mounting assembly 5 is connected to the transmission 7 in the powertrain and located at the front side of the engine 6. The first beam 13 is a rear cross beam of the vehicle frame 1, and the second beam 14 is a connecting beam located in a middle portion of the vehicle frame 1 and above the left longitudinal beam 11 and the right longitudinal beam 12.

In some embodiments, as shown in FIG. 5, the transmission 7 and the engine 6 are arranged in the front-rear direction. The third mounting assembly 4 is connected to a housing of the engine 6, and the fourth mounting assembly 5 is connected to a housing of the transmission 7. A height of at least one of the third mounting portion and the fourth mounting portion is greater than a height of a crankshaft axis of the engine 6. A height difference, denoted as h1, is formed between at least one of the third mounting portion and the fourth mounting portion and the crankshaft axis, and 115 mm ≤ h1 ≤ 135 mm.

In this case, at least one of the third mounting assembly 4 and the fourth mounting assembly 5 is closer to the crankshaft axis without affecting the operation of the engine 6 and closer to the center of mass of the engine 6 in the left-right direction, so that the counteracting effect of the third mounting assembly 4 and the fourth mounting assembly 5 on the overturning moment is better.

Specifically, each of the first mounting assembly 2 and the second mounting assembly 3 is connected to the transmission 7. The height difference h1 between the third mounting portion and the crankshaft axis may be 115 mm, 125 mm or 135 mm.

In some embodiments, as shown in FIG. 5, a height of at least one of the first mounting portion and the second mounting portion is lower than the height of the crankshaft axis. A height difference, denoted as h2, is formed between at least one of the first mounting portion and the second mounting portion and the crankshaft axis, and 49 mm ≤ h2 ≤ 69 mm.

At least one of the first mounting portion and the second mounting portion and at least one of the third mounting portion and the fourth mounting portion are respectively disposed at two sides of the crankshaft axis in the up-down direction, and 49 mm ≤ h2 ≤ 69 mm, which not only effectively counteracts the reciprocating inertia force, the rotational inertia force and the overturning moment, but also makes the connection positions of the first mounting assembly 2 and the second mounting assembly 3 with the powertrain and the vehicle frame 1 convenient and flexible.

Specifically, the height difference h2 between the first mounting portion and the crankshaft axis may be 49 mm, 59 mm or 69 mm. The second mounting portion may be closer to the crankshaft axis, for example, less than 49 mm.

In some embodiments, the third mounting portion includes three mounting holes 431 distributed in a triangular shape.

That is, at least three connection points are formed between the third mounting assembly 4 and the first beam 13, thereby improving the connection strength and stability between the third mounting assembly 4 and the first beam 13, and enabling the mounting system for the powertrain to effectively counteract the rotational inertia force and the reciprocating inertia force.

Specifically, the three mounting holes 431 are distributed in a triangular shape on a horizontal plane perpendicular to the up-down direction.

In some embodiments, a height difference, denoted as h3, is formed between the first mounting portion and the second mounting portion, and 52 mm ≤ h3 ≤ 72 mm. A height difference, denoted as h4, is formed between the third mounting portion and the fourth mounting portion, and 131 mm ≤ h4 ≤ 151 mm.

When the powertrain is arranged longitudinally, the selection of connection positions of the first mounting assembly 2 to the fourth mounting assembly 5 with the vehicle frame 1 and the powertrain is more convenient and flexible, so that the occupied space of the mounting system for the powertrain and the powertrain in the left-right direction within the vehicle frame 1 is smaller, and the space utilization rate within the vehicle frame 1 is higher.

Specifically, as shown in FIGS. 3 and 4, the third mounting portion is lower than the fourth mounting portion. The height difference h4 between the third mounting portion and the fourth mounting portion may be 131 mm, 141 mm or 151 mm. The first mounting portion is lower than the second mounting portion. The height difference h3 between the first mounting portion and the second mounting portion may be 52 mm, 62 mm or 72 mm.

In some embodiments, as shown in FIGS. 1-9, at least one of the first mounting assembly 2, the second mounting assembly 3, the third mounting assembly 4 and the fourth mounting assembly 5 includes a first bracket 41, a second bracket 43, and a damping member 42 sandwiched between the first bracket 41 and the second bracket 43. The first bracket 41 and the second bracket 43 are respectively connected to the powertrain and the vehicle frame 1. The damping member 42 is detachably connected to at least one of the first bracket 41 and the second bracket 43.

Taking the damping member 42 being detachably connected to each of the first bracket 41 and the second bracket 43 as an example, when the powertrain is mounted to the vehicle frame 1 via the mounting assembly, an assembly sequence among the powertrain, the first bracket 41, the damping member 42, the second bracket 43 and the vehicle frame 1 can be adjusted to effectively reduce the assembly difficulty of the powertrain on the vehicle frame 1.

Specifically, the damping member 42 may be made of rubber. The damping member 42 in the third mounting assembly 4 is non-detachably connected to the second bracket 43 and detachably connected to the first bracket 41. The damping member 42 in the fourth mounting assembly 5 may also be non-detachably connected to each of the first bracket 41 and the second bracket 43.

An all-terrain vehicle according to embodiments of the present invention includes the mounting system for the powertrain according to any one of the above embodiments.

Technical advantages of the all-terrain vehicle according to embodiments of the present invention are the same as those of the mounting system for the powertrain according to the above embodiments, and will not be repeated here.

In the description of the present invention, it should be understood that the orientation or position relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present invention and simplifying the description, and does not indicate or imply that the referred device or element must have a specific orientation, and be constructed and operated in a specific orientation, so it cannot be understood as a limitation of the present invention.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present invention, "a plurality of" means at least two, such as two, three, etc., unless otherwise specifically defined.

In the present invention, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present invention may be understood according to the specific situations.

In the present invention, unless otherwise expressly defined, the first feature "below", "under", "on bottom of", "above", "on", or "on top of" the second feature may include an embodiment in which the first feature is in direct contact with the second feature, or the first feature is in indirect contact with the second feature through an intermediate media. And, the first feature "above", "on", or "on top of" the second feature may include an embodiment in which the first feature is right or obliquely "above", "on", or "on top of" the second feature, or just means that the first feature is at a height higher than that of the second feature. The first feature "below", "under", or "on bottom of" the second feature may include an embodiment in which the first feature is right or obliquely "below", "under", or "on bottom of" the second feature, or just means that the first feature is at a height lower than that of the second feature.

In the description of the present invention, terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in one or more embodiments or examples in any suitable manner. In addition, without contradiction, those skilled in the art may combine and unite different embodiments or examples or features of the different embodiments or examples described in this specification.

Although the embodiments of the present invention have been shown and described above, it may be understood that the above embodiments are illustrative and shall not be understood as limitation to the present invention, and changes, modifications, alternatives and variations may be made in the above embodiments within the scope of the present invention by those skilled in the art.

## Claims

1. A mounting system for a powertrain, configured to be mounted to a vehicle frame, wherein the vehicle frame comprises a left longitudinal beam, a right longitudinal beam and a first beam, the first beam connects the left longitudinal beam and the right longitudinal beam and is arranged between the left longitudinal beam and the right longitudinal beam, the powertrain comprises an engine and a transmission, the engine comprises a plurality of pistons arranged along a front-rear direction, and the mounting system for the powertrain comprises:
a first mounting assembly, a second mounting assembly and a third mounting assembly, wherein the first mounting assembly is connected to the left longitudinal beam, the second mounting assembly is connected to the right longitudinal beam, the third mounting assembly is connected to the first beam, and the third mounting assembly is configured to be adjacent to a reference plane and located at a front side or a rear side of the engine, wherein the reference plane is a plane where axes of the plurality of pistons lie.

2. The mounting system for the powertrain according to claim 1, wherein the vehicle frame further comprises a second beam spaced apart from the first beam along the front-rear direction, and the second beam connects the left longitudinal beam and the right longitudinal beam and is arranged between the left longitudinal beam and the right longitudinal beam; and
the mounting system for the powertrain further comprises a fourth mounting assembly configured to be connected to the second beam and adjacent to the reference plane, and the fourth mounting assembly and the third mounting assembly are respectively configured to be arranged at two opposite sides of the engine in the front-rear direction.

3. The mounting system for the powertrain according to claim 2, wherein the first mounting assembly has a first mounting portion configured to be connected to the left longitudinal beam, the second mounting assembly has a second mounting portion configured to be connected to the right longitudinal beam, the third mounting assembly has a third mounting portion configured to be connected to the first beam, and the second mounting assembly has a fourth mounting portion configured to be connected to the second beam; and
a height of the third mounting portion and a height of the fourth mounting portion are higher than a height of the first mounting portion and a height of the second mounting portion.

4. The mounting system for the powertrain according to claim 3, wherein the transmission and the engine are arranged in the front-rear direction, the third mounting assembly is configured to be connected to a housing of the engine, the fourth mounting assembly is configured to be connected to a housing of the transmission, a height of at least one of the third mounting portion and the fourth mounting portion is greater than a height of a crankshaft axis of the engine, and a height difference, denoted as h1, is formed between the at least one of the third mounting portion and the fourth mounting portion and the crankshaft axis, wherein 115 mm ≤ h1 ≤ 135 mm.

5. The mounting system for the powertrain according to claim 4, wherein a height of at least one of the first mounting portion and the second mounting portion is lower than the height of the crankshaft axis, and a height difference, denoted as h2, is formed between the at least one of the first mounting portion and the second mounting portion and the crankshaft axis, wherein 49 mm ≤ h2 ≤ 69 mm.

6. The mounting system for the powertrain according to claim 5, wherein the third mounting portion comprises three mounting holes distributed in a triangular shape.

7. The mounting system for the powertrain according to claim 3, wherein a height difference, denoted as h3, is formed between the first mounting portion and the second mounting portion, wherein 52 mm ≤ h3 ≤ 72 mm.

8. The mounting system for the powertrain according to claim 3, wherein a height difference, denoted as h4, is formed between the third mounting portion and the fourth mounting portion, wherein 131 mm ≤ h4 ≤ 151 mm.

9. The mounting system for the powertrain according to any one of claims 2 to 8, wherein at least one of the first mounting assembly, the second mounting assembly, the third mounting assembly and the fourth mounting assembly comprise a first bracket, a second bracket and a damping member interposed between the first bracket and the second bracket, the first bracket and the second bracket are respectively configured to be connected to the powertrain and the vehicle frame, and the damping member is detachably connected to at least one of the first bracket and the second bracket.

10. An all-terrain vehicle, comprising the powertrain and the mounting system for the powertrain according to any one of claims 1 to 9.
